# EUROPEAN PATENT SPECIFICATION

(11) **EP 0 342 176 B1**
(45) Date of publication and mention of the grant of the patent: **14.08.1996**
(21) Application number: 89850153.1
(22) Date of filing: 10.05.1989
(51) Int. Cl.: D21G 1/02, F16C 13/00

(54) **Fluid distribution system for a variable-crown roll and method for producing the same**
Flüssigkeitsverteilungssystem für eine Durchbiegungseinstellwalze und Verfahren zum Herstellen desselben
Système de distribution du liquide pour un rouleau à réglage de la flexion et son procédé de fabrication

(30) Priority: 11.05.1988 FI 882214
(43) Date of publication of application: 15.11.1989
(73) Proprietor: VALMET CORPORATION, 00620 Helsinki (FI)
(72) Inventor: Niskanen, Juhani, SF-40950 Muurame (FI)
(74) Representative: Rostovanyi, Peter

(56) References cited:
- DE-A- 3 526 283
- FR-A- 2 368 631
- US-A- 4 035 038

## Description

The invention concerns a fluid distribution system for a variable-crown roll adjustable in zones, according to the preamble of claim 1. The invention further concerns a method for forming a fluid distribution system for such a roll.

In prior art, several different adjustable-crown rolls for paper machines or paper finishing equipment are known, for which said rolls different designations are used, such as variable-crown roll, roll adjustable in zones, and equivalent. As a rule, these rolls comprise a massive or tubular, stationary roll axle and a roll mantle arranged as revolving around said axle. Between said axle and the mantle, arrangements of glide shoes and/or a chamber of pressure fluid or a series of chambers, acting upon the inner face of the mantle, are arranged so that the axial profile of the mantle at the nip can be aligned or adjusted as desired.

In variable-crown rolls, a complicated fluid distribution system is required, because the roll includes several points to which fluid must be passed. Such points include the zones in a variable-crown roll, to which pressure fluid must be passed, various points that require lubrication, to which lubrication oil is passed, possible means for the heating of the roll for the supply of heating fluid, and corresponding points that consume fluid. Since a roll includes a great number of different fluid-consuming points, the roll must, of course, also have a system of ducts for the outlet fluid. In prior art, the system of fluid distribution ducts has been formed in a variable-crown roll in a number of alternative ways.

One prior-art solution is described, e.g., in the US-A-4,222,324 and FR-A-2 368 651 wherein an axial bore of its own has been formed into the axle of the variable-crown roll for each zone of the variable-crown roll, the fluid being passed into the zones out of said bore through radial bores. Thus, into such a roll, it has been necessary to make a considerably high number of bores and various pipe systems. This results in the drawback that the cost of manufacture of the system of fluid distribution ducts is quite high and the system of ducts requires very careful workmanship, for various rubbish, dirt, machining cuttings, and equivalent tend to remain in said ducts. Moreover, for possible heating and lubrication of the roll, it has been necessary to form bores of their own into the roll axle, or the roll has had to be provided with a separate system of ducts for these functions.

Another prior-art solution is described, e.g., in the DE Patent No. 28 47 029, in whose construction an axial bore of large diameter has been formed into the roll axle, into which said bore a series of pipes is fitted comprising a number of pipes, through which the pressure fluid is passed to the hydrostatic loading elements placed in the zones in the roll. The pipe series is connected with a number of sealing elements, by means of which the series of pipes is sealed relative the axial bore in the axle between the zones. One of the considerable drawbacks of this arrangement is that the pipe series comprises a number of sealing points, and consequently it comprises a number of seals. Moreover, the pipes included in the series of pipes must be of very high quality in order to endure the pressures required by the zones. Moreover, these drawbacks have the consequence that the construction of said DE patent is very expensive and difficult to manufacture. Also, such a solution requires its own and separate systems of ducts, e.g., for possible heating of the roll and for the objects that require lubrication.

A further prior-art solution is described, e.g., in the US Patent 4,106,405. In the solution of this publication, a central hole of large diameter has been formed into the roll axle, in which said hole coaxially arranged pipes are fitted, through which the pressure fluid is fed into the zones of the roll. This solution also involves a number of various drawbacks, of which might be mentioned, e.g., that the wall thicknesses of the pipes must be large, because the pressures required by adjoining zones may differ from each other quite essentially. Thus, the risk of buckling of the pipes is quite high. The sealing of the pipes in this solution is also quite problematic, for the pipes must be sealed relative one another, on one hand, and they must be sealed relative the central hole formed into the roll axle, on the other hand. Thus, such a fluid distribution system is difficult and expensive in view of the manufacture. In this system as well, for possible heating of the roll, the roll must be provided with a separate fluid distribution system.

The object of the present invention is to provide such a fluid distribution system for a variable-crown roll by means of which the above drawbacks involved in prior art are avoided and by means of which an essential improvement is achieved over the prior art. In view of achieving this, the invention is characterized by the features defined in the characterizing parts of claims 1 and 5, respectively.

FR-A-2 368 631 is the basis of the preamble of claim 1, disclosing through axial ducts in a profile arranged in a hole in the central axle of a variable-crown roll.

Of the advantages of the invention over the prior-art solutions, e.g., the following should be mentioned. In the invention, the system of fluid distribution ducts is formed of a single profile, which is fitted into a hole formed axially into the roll axle. This profile includes the ducts for the pressure fluid passing to the zones and may include the ducts for the lubricant, the duct for the exhaust oil, and, if necessary, a system of ducts for heating fluid. Thus, if necessary, by means of the profile in accordance with the invention, all the requirements imposed by the whole circulation of fluid in the roll can be handled by means of the profile in accordance with the invention. The solution of the present invention is also preferable to the solutions currently in use in respect of the sealing, for the invention does not involve a number of pipes to be sealed, but only the profile has to be sealed in the hole formed into the roll axle. The material of the profile may be, e.g., aluminium or a suitable aluminium alloy, in which case the profile can be manufactured by means of extrusion and thereinafter be cut to the specified dimension. The installation of such a profile into the roll is also simple and easy, because the profile is of relatively low weight and because there are quite few points to be sealed between the profile and the roll axle. The other advantages and characteristic features of the invention come out from the following detailed description of the invention, to which alone the invention is, however, not supposed to be confined.

Figure 1 is a schematical longitudinal sectional view of a variable-crown roll which is provided with a fluid distribution system in accordance with the invention.

Figure 2 is a schematical cross-sectional view of the profile that constitutes the system of fluid distribution ducts.

Figure 3 is a schematical sectional view along the line III-III in Fig. 2.

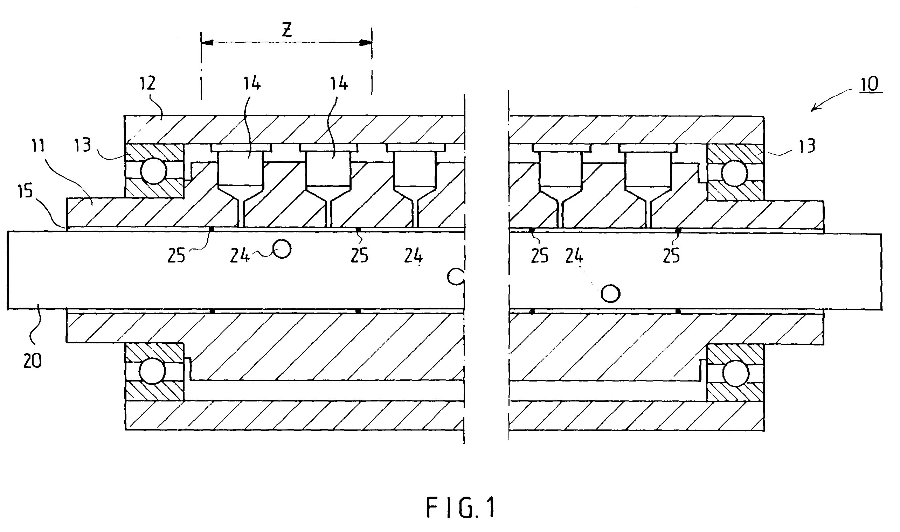

In Fig. 1, the variable-crown roll is denoted generally with the reference numeral 10. The roll 10 comprises a roll axle 11 and a roll mantle 12 arranged revolving on said axle. Between the roll axle 11 and the roll mantle 12, loading elements 14 acting upon the inner face of the roll mantle 12 are fitted, by means of which the roll mantle 12 is loaded in the nip plane so as to adjust the axial profile of the roll mantle in the desired way. The roll 10 shown in Fig. 1 is a so-called variable-crown roll adjustable in zones, wherein the loading elements 14 of the roll are divided into zones in the axial direction of the roll, one of these zones being denoted with the reference denotation Z in Fig. 1. In the roll shown in Fig. 1, the roll mantle 12 is additionally supported on the roll axle 11 by means of end bearings 13. The roll 10 may, however, also be a so-called self-loading roll, wherein the roll mantle 12 can move in the direction of compression relative the roll axle 11. Into the roll axle 11 a through hole 15 has been formed axially, into which said hole a profile 20 in accordance with the invention, which constitutes the system of fluid distribution ducts, has been fitted. Said profile 20 is sealed in a suitable way in the hole 15 formed into the roll axle between the zones Z. This is arranged, e.g., so that on the profile 20 seals 25 have been placed in suitable locations, and hereupon the profile 20 has been pushed into the hole 15 formed into the roll axle 11. In Fig. 1 it is shown that the axial hole 15 extends through the axle 11, but if the supply of the fluid into the roll 10 and the removal of the fluid out of the roll 10 are arranged as taking place through the same end of the roll 10, the hole 15 does not have to extend completely through the axle 11.

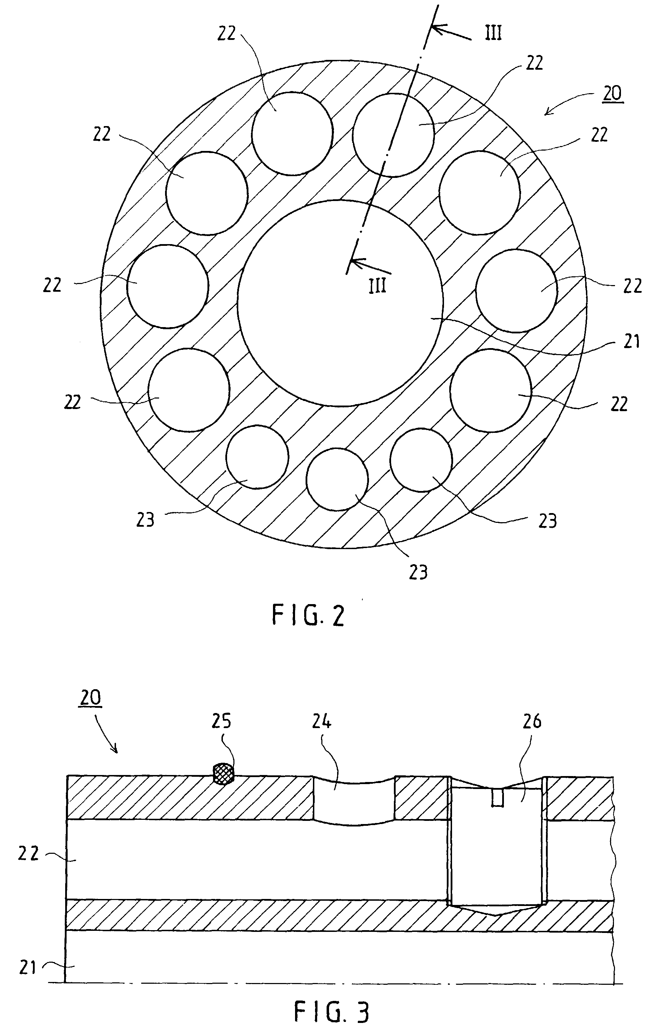

Fig. 2 is a cross-sectional view of an advantageous embodiment of the profile 20 in accordance with the invention. Into the profile 20 of circular section a system of ducts 21...23 has been formed, which, in the embodiment shown in Fig. 2, comprises a central duct 21 of large diameter formed into the middle of the profile as well as first side ducts 22 and second side ducts 23, of smaller diameter, arranged around the central duct 21 in circumferential form. Said ducts 21...23 extend across the entire length of the profile 20. The material of the profile 20 may be, e.g., aluminium, aluminium alloy, or equivalent, in which case it is manufactured advantageously by extrusion. In the profile 20 shown in Fig. 2, the first side ducts 22 may be intended, e.g., for the pressure fluid passing to the zones Z of the variable-crown roll 10, and the second side ducts 23, e.g., for the lubricant. The removal of the fluid from the interior of the roll 10 may be arranged through the central duct 21.

In Fig. 3 it is shown by way of example how the supply of the pressure fluid to the zone Z in the variable-crown roll 10 is arranged through one first side duct 22. For the supply of the pressure fluid from the side duct 22 to the zone Z, facing the zone, a transverse bore 24 has been formed into the profile 20, said bore extending from the outer face of the profile to the first side duct 22. After the transverse bore 24, the first side duct 22 is closed by a closing plug 26, so that through said duct 22 the pressure has access to said desired adjusting zone Z only. In the embodiment of Fig. 3, the closing of the duct 22 is arranged so that into the profile 20 a threaded hole larger than the diameter of the duct 22 has been formed, into which said threaded hole a closing plug 26 provided with an outer threading is turned so that it blocks the duct 22. Of course, the closing of the duct 22 may also be arranged in some other suitable way.

Also, in Fig. 3, an embodiment is illustrated for how the profile 20 can be sealed in the hole 15 formed into the roll axle 11. In the embodiment of Fig. 3, a groove or equivalent has been formed into the outer face of the profile, a seal 25 passing around the profile being fitted into said groove. Seals 25 of said sort are fitted on the profile 20 between each of the zones Z in the roll 10. By means of such a solution, the profile 20 with its ducts 21...23, bores 24, and closing plugs 26 and seals 25 can be formed into a completely finished unit, which is inserted into the hole 15. The construction of the seal 25 and its attachment to the profile 20 may, of course, also be arranged in some other way, which differs from the embodiment shown in Fig. 3.

The profile 20 in accordance with the invention may also be used in rolls that require heating, such as, e.g., upper rolls of super-calenders. In such solutions, the heating fluid may be passed into the roll, e.g., through the central duct 21 of the profile, from which removal of the fluid out of the roll is additionally arranged through the opposite end of the roll. In such a solution, only the central duct 21 has to be closed between the inlet and the outlet of the fluid, e.g., by means of a closing plug or equivalent. The heating fluid can be passed from the central duct 21 onto the inner face of the roll mantle 12, e.g., through suitable transverse bores. In a corresponding way, the outlet fluid can be passed into the central duct 21 through transverse bores.

Even though, by means of the profile 20 in accordance with the invention, consisting of the system of fluid distribution ducts, it is possible, if necessary, to handle all of the requirements of fluid circulation in a variable-crown roll 10, or at least the major part of these requirements, the solution in accordance with the invention does not exclude the alternative that other bores have also been formed into the roll axle 11 for fluid circulation.

## Claims

1. Fluid distribution system for a variable-crown roll adjustable in zones (Z), which roll (10) comprises a stationary central axle (11) and a revolving roll mantle (12) arranged on said axle, hydraulic loading elements (14) acting upon the inner face of the roll mantle (12) or a corresponding pressure-fluid chamber or a series of chambers being provided in the space between said central axle (11) and said mantle (12), by means of which said elements or chambers the axial profile of the variable-crown roll (10) can be adjusted, the pressure fluid distribution system (20) of the roll, through which system at least the pressure fluid passing to the zones (Z) of the roll (10) is arranged to be supplied, comprising an oblong continuous profile of substantially circular cross-section, which profile is arranged in an axial hole (15) provided in the central axle (11) and is sealed at its outer face with respect to said hole (15) by means of seals (25) between the zones (Z), and further comprising several axial ducts (21-23), of which at least one (22) extends across the entire length of the profile (20), and transverse bores (24) for passing the pressure fluid at least to the hydraulic loading elements (14), **characterized** in that said at least one axial duct (22) is closed by means of a closing plug (26) or the equivalent at a desired location in the axial direction for guiding the fluid from the axial duct (22) to the desired transverse bore (24).

2. Fluid distribution system as claimed in claim 2, **characterized** in that the ducts (22) in the profile that are intended for the pressure fluid passing to the zones (Z) in the roll (10) are closed, in the direction of feed of the fluid, after the transverse bores (24) opening from said ducts (22) to the outer face of the profile (20).

3. Fluid distribution system as claimed in claim 1 or 2, **characterized** in that the profile (20) further includes ducts (21, 23) for lubrication fluid, for possible roll-heating fluid, as well as for exhaust fluid.

4. Fluid distribution system as claimed in anyone of the preceding claims, **characterized** in that said profile (20) is manufactured of aluminium or an alloy thereof by extrusion.

5. A method for producing a pressure fluid distribution system according to anyone of claims 1-4, **characterized** in that said profile (20) is extruded to a semi-manufactured product and cut to a specified dimension before being placed in the axial hole (15) in the central axle (11).

## Patentansprüche

1. Fluidverteilungssystem für eine in Zonen (Z) einstellbare Walze mit variabler Durchbiegung, wobei die Walze (10) eine ortsfeste Mittelachse (11) und einen auf der Achse angeordneten drehbaren Walzenmantel (12) aufweist, wobei auf die Innenfläche des Walzenmantels (12) wirkende Hydraulikladeelemente (14) oder eine entsprechende Druckfluidkammer oder eine Reihe von Kammern in dem zwischen der Mittelachse (11) und dem Mantel (12) befindlichen Raum vorgesehen sind, wobei mit Hilfe der Elemente oder Kammern das Axialprofil der Walze mit variabler Durchbiegung (10) einstellbar ist, wobei das Druckfluidverteilungssystem (20) der Walze, durch das zumindest das zu den Zonen (Z) der Walze (10) geführte Druckfluid eingespeist werden kann, ein längliches kontinuierliches Profil mit im wesentlichen kreisförmigem Querschnitt aufweist, welches Profil in einem in der Mittelachse (11) vorgesehenen Axialloch (15) angeordnet ist und an seiner Außenfläche zum Loch (15) hin mittels Abdichtungen (25) zwischen den Zonen (Z) abgedichtet ist, und ferner mehrere Axialleitungskanäle (21 bis 23), von denen sich zumindest einer (22) über die gesamte Länge des Profils (20) erstreckt, und Querbohrungen (24) für das Führen des Druckfluids zumindest zu den Hydraulikladeelementen (14) aufweist, **dadurch gekennzeichnet, daß** der zumindest eine Axialleitungskanal (22) mit Hilfe eines Verschlußstopfens (26) oder dergleichen an einer in der Axialrichtung erwünschten Stelle abgeschlossen ist, um das Fluid von dem Axialleitungskanal (22) zu der erwünschten Querbohrung (24) zu leiten.

2. Fluidverteilungssystem gemäß Patentanspruch 2, **dadurch gekennzeichnet, daß** die für das zu den Zonen (Z) in der Walze (10) geführte Druckfluid vorgesehenen Kanalleitungen (22) in dem Profil abgeschlossen sind, und zwar in Fluidzufuhrrichtung nach den sich von den Leitungskanälen (22) zu der Außenfläche des Profiles (20) öffnenden Querbohrungen (24).

3. Fluidverteilungssystem gemäß Patentanspruch 1 oder 2, **dadurch gekennzeichnet, daß** das Profil (20) ferner Leitungskanäle (21, 23) für Schmierfluid, für mögliches Walzenheizfluid sowie für Auslaßfluid enthält.

4. Fluidverteilungssystem gemäß einem der vorhergehenden Patentansprüche, **dadurch gekennzeichnet, daß** das Profil (20) durch Extrusion von Aluminium oder einer Legierung davon hergestellt worden ist.

5. Verfahren zur Herstellung eines Druckfluidverteilungssystems gemäß einem der Patentansprüche 1 bis 4, **dadurch gekennzeichnet, daß** das Profil (20) bis zu einem halbgefertigten Produkt extrudiert worden ist und auf eine bestimmte Abmessung geschnitten worden ist, bevor es in dem Axialloch (15) in der Mittelachse (11) angeordnet wird.

## Revendications

1. Système de distribution de fluide pour rouleau à bombé variable réglable dans des zones (Z), lequel rouleau (10) comporte un axe central fixe (11) et une enveloppe rotative (12) de rouleau disposée sur ledit axe, des éléments hydrauliques de chargement (14) agissant sur la face interne de l'enveloppe (12) de rouleau ou une chambre correspondante de fluide sous pression ou une série de chambres se trouvant dans l'espace entre ledit axe central (11) et ladite enveloppe (12), le profil axial du rouleau (10) à bombe' variable pouvant être réglé à l'aide desdits éléments ou chambres, le système de distribution (20) de fluide sous pression du rouleau, système par l'intermédiaire duquel au moins le fluide sous pression passant vers les zones (Z) du rouleau (10) est conçu pour être fourni, comportant un élément profilé continu oblong à section transversale sensiblement circulaire, lequel élément profilé se trouve dans un trou axial (15) ménagé dans l'axe central (11) et est rendu étanche au niveau de sa face extérieure par rapport audit trou (15) à l'aide de joints (25) entre les zones (Z), et comportant en outre plusieurs conduits axiaux (21-23), dont l'un (22) au moins s'étend sur toute la longueur de l'élément profilé (20), et des alésages transversaux (24) pour faire passer le fluide sous pression au moins jusqu'aux éléments hydrauliques de chargement (14), caractérisé en ce que ledit conduit axial au moins unique (22) est fermé à l'aide d'un bouchon de fermeture (26) ou équivalent à un emplacement voulu dans la direction axiale pour guider le fluide depuis le conduit axial (22) jusqu'à l'alésage transversal voulu (24).

2. Système de distribution de fluide selon la revendication 2, caractérisé en ce que les conduits (22) présents dans l'élément profilé destinés au fluide sous pression passant vers les zones (Z) du rouleau (10) sont fermés, dans la direction d'alimentation du fluide, après les alésages transversaux (24) débouchant depuis lesdits conduits (22) sur la face extérieure de l'élément profilé (20).

3. Système de distribution de fluide selon la revendication 1 ou 2, caractérisé en ce que l'élément profilé (20) comporte en outre des conduits (21, 23) pour fluide de lubrification, pour fluide en cas d'échauffement éventuel du rouleau, ainsi que pour fluide d'échappement.

4. Système de distribution de fluide selon l'une quelconque des revendications précédentes, caractérisé en ce que ledit élément profilé (20) est fabriqué par extrusion d'aluminium ou d'un alliage de celui-ci.

5. Procédé pour fabriquer un système de distribution de fluide sous pression selon l'une quelconque des revendications 1 à 4, caractérisé en ce que ledit élément profilé (20) est extrudé sous la forme d'un produit semi-fini et est coupé à une dimension donnée avant d'être placé dans le trou axial (15) de l'axe central (11).
